# EUROPÄISCHE PATENTSCHRIFT

(11) **EP 4 569 595 B1**
(45) Veröffentlichungstag und Bekanntmachung des Hinweises auf die Patenterteilung: **15.07.2026**
(21) Anmeldenummer: 23786502.7
(22) Anmeldetag: 04.10.2023
(51) Int. Cl.: H02K 5/128, H02K 9/197, H02K 15/12, H02K 15/14

(54) **VERFAHREN ZUR HERSTELLUNG EINES ELEKTROMOTORS UND ELEKTROMOTOR**
METHOD FOR PRODUCING AN ELECTRIC MOTOR, AND ELECTRIC MOTOR
PROCÉDÉ DE FABRICATION D'UN MOTEUR ÉLECTRIQUE ET MOTEUR ÉLECTRIQUE

(30) Priorität: 07.10.2022 DE 102022003715; 03.03.2023 DE 102023000789; 05.08.2023 DE 102023003249
(43) Veröffentlichungstag der Anmeldung: 18.06.2025
(73) Patentinhaber: Groschopp AG Drives & More, 41747 Viersen (DE)
(72) Erfinder: KLUPP, Alexander, 41836 Hückelhoven (DE); TERKATZ, Marcus, 41748 Viersen (DE)
(74) Vertreter: Cohausz & Florack
(86) Internationale Anmeldenummer: PCT/EP2023/077454
(87) Internationale Veröffentlichungsnummer: WO 2024/074557

(56) Entgegenhaltungen:
- EP-A1- 3 972 095
- DE-A1- 102021 103 985
- JP-A- 2019 068 702
- JP-A- H04 150 746
- JP-A- H05 227 709
- JP-A- H11 146 593

## Beschreibung

Die Erfindung betrifft ein Verfahren zur Herstellung eines Elektromotors, der
- ein Gehäuse, das einen oder mehrere Gehäusedeckel umfassen kann, mit einem Stator,
- einen Rotor mit einer Drehachse und
- ein an der Statorinnenwand des Stators anliegendes Spaltrohr, das eine Fluidkühleinrichtung des Stators zum Rotor hin abdichtet,
aufweist.

Die Erfindung betrifft ferner einen ebensolchen Elektromotor.

Derartige Elektromotoren sind bekannt. Das Spaltrohr dient dazu, den Statorraum vom Rotorraum abzuschirmen, um dichtend ein Fluid allein im Statorraum in unmittelbarer Nachbarschaft zu den Wickelspulen fließen lassen zu können, ohne den Rotor zu beeinflussen. Dies gilt insbesondere für eine Kühlung durch eine Flüssigkeit, die in kaltem Zustand in den Statorraum eingeleitet und im erwärmten Zustand aus dem Statorraum wieder abgeführt wird. Es hat sich herausgestellt, dass ein Thermoöl dafür besonders geeignet ist.

Die DE 41 38 268 A1 beschreibt beispielsweise einen im Statorraum wassergekühlten und im Rotorraum luftgekühlten Elektromotor. Die in den Statornuten befindlichen Wicklungen werden direkt vom Kühlwasser umspült. Im Statorblechpaket sind die Nutspalte flüssigkeitsdicht umschlossen. Gegenüber einer Kühlung durch ein Thermoöl sind die Betriebstemperaturen auf das Fenster von 0°C bis 100°C begrenzt. Ein Spaltrohr, das sich axial an der Innenwand des Stators erstreckt - so wie es in dieser Erfindung vorausgesetzt wird - ist nicht vorgesehen. Der Anmelder hat ausgeführt, dass ein Spaltrohr Platz benötigt und welche Nachteile damit verbunden sind. Dieser Platz kann durch einen vergrößerten Luftspalt zwischen Läufer und Stator geschaffen werden. Dadurch verringere sich allerdings die Leistung des Motors und man verschlechtere den Wirkungsgrad.

In der EP 1 272 747 A1 wurde dieses Problem erkannt. Aus diesem Grund hat man den Mittelteil eines Spaltrohres dünnwandiger ausgebildet als die Seitenteile (an den axialen Enden des Elektromotors), mit denen das dünnwandigere Mittelteil verbunden werden muss.

Die Gestaltung und der Einbau eines solchen Spaltrohres ist bei der Herstellung eines Elektromotors sehr aufwändig.

Die Dokumente EP 3 972 095 A1, JP 2019 068702 A und DE 10 2021 103985 A1 beschreiben weitere Beispiele für Elektromotoren mit Spaltrohren.

Es ist die Aufgabe der Erfindung, die Herstellung eines Elektromotors mit Stator, Rotor und Spaltrohr zu vereinfachen und einen entsprechend vereinfacht hergestellten Elektromotor zu schaffen.

Verfahrensmäßig wird die Aufgabe durch die Merkmale des Anspruchs 1 gelöst.

So wird durch eine relativ einfache Herstellung des Elektromotors sichergestellt, bei der der Statorraum und dessen Kühlfluid vollständig abgegrenzt sind vom Rotorraum. Er ist insbesondere für die Verwendung von Thermoöl als Kühlfluid geeignet und es wird die Drehung des Rotors nicht in uneffektiver Weise durch das Kühlfluid beeinflusst. Das Kühlfluid kann durch eine Umwälzanlage, auf die hier nicht näher eingegangen werden soll, in den Statorraum hinein- und wieder abgeführt werden.

Im Grunde sind wenige einfache Schritte bei der Herstellung des Elektromotors gemäß der Erfindung notwendig.

Zunächst wird der Rotor noch nicht in das Gehäuse mit dem Stator eingebaut, so dass der für ihn vorgesehene Raum frei bleibt. Stattdessen wird ein rohrförmiger erwärmter Vorformling in diesen Bereich eingeführt, der an einem Ende einen Zugang für eine Gasdruckeinleitung aufweist. Die Erwärmungstemperatur des thermoplastischen Materials könnte beispielsweise bei in der Regel 90°C bis 150°C liegen, bei PFA noch wesentlich höher, aber bevorzugt knapp über der Erweichungstemperatur des Materials.

Durch die Erweichung des thermoplastischen Materials lässt sich der rohrförmige Vorformling regelrecht aufblasen. Das kann mit einem Gasdruck beispielsweise bei 1 bis 2 bar beginnen und mit einem Gasdruck von bis zu 40 bar enden. Dabei bildet das Gehäuse mit Stator die endgültige Form. Man kennt ähnliche Verfahren beispielsweise bei der Herstellung von PET-Flaschen. Bei dem Vorgang verringert sich die Wandstärke, so dass man am Ende nach einer Erkaltung und Aushärtung ein an dem Stator anliegendes dünnes ausgeformtes Spaltrohr erhält, das den Abstand zwischen Stator und Rotor in effektiver Weise sehr geringhält. Damit es unter dem späteren Druck des Kühlfluids nicht kollabiert, könnte mit Vorteil dafür gesorgt sein, dass die Oberfläche des Spaltrohrs eine Verbindung mit der Statorinnenfläche eingeht. Bei dieser Verbindung kann es sich beispielsweise um eine formschlüssige oder stoffschlüssige Verbindung handeln. Ohne solche weitergehenden Maßnahmen sollte bei dem Elektromotor mit sehr dünnem Spaltrohr die Kühlflüssigkeit im Betrieb auf möglichst niedrigem Druckniveau durch einen Wärmetauscher und den Statorraum umgewälzt werden. Dennoch ist ein Ausgleichsbehälter erforderlich, da sich die Kühlflüssigkeit erwärmt und dabei ausdehnt. Die größte Erwärmung findet in den Spulen des Elektromotors statt. Diese sind zum restlichen Motor hin elektrisch isoliert. Gute elektrische Isolatoren sind in der Regel auch gute thermische Isolatoren. Somit kann ein elektrischer Motor allein dadurch verbessert werden, wenn man eine thermische Brücke zwischen der Spule und dem Wärmetauscher schafft. Diese Brücke kann in einer möglichen Ausprägung die Kühlflüssigkeit sein. Der Wärmetauscher ist im einfachsten Fall die glatte Oberfläche des Motors oder eine Rippenstruktur auf der Oberfläche.

Der an den Enden des (durch das Aufblasen der Vorformlings entstandenen) Spaltrohrs noch vorhandene Deckel und/oder Boden und/oder Hals mit dem Gasdruckanschluss muss als überschüssiges Material entfernt werden. Hier werden diese Enden als Butzen bezeichnet. So erhält man ein vorzugsweise vorwiegend zylindrisches, aber an die Statorinnenwand angepasstes Rohr in Kontakt mit dem Stator.

Durch das Abtrennen der Butzen wird auch der Freiraum für den Rotor geschaffen, der in üblicher Weise eingeschoben und gelagert werden kann.

Ein großer Vorteil des erfindungsgemäßen Verfahrens zur Herstellung eines Elektromotors ist es demnach, dass das Spaltrohr mit seinen endgültigen Abmessungen und insbesondere hinsichtlich des Durchmessers angepasst an die geometrischen Verhältnisse innerhalb des Gehäuses erzeugt werden kann. Es entfallen die externen Fertigungs- und Formgebungsprozesse für ein Spaltrohr sowie dessen Einbau in den herzustellenden Elektromotor also vollständig.

Bevorzugt wird als Vorformling ein thermoplastischer, vorzugsweise polymerer Kunststoff verwendet.

Dabei ist darauf zu achten, dass er als später ausgebildetes Spaltrohr den Betriebstemperatur des Elektromotors standhält. Häufig in ähnlichen Aufblasverfahren verwendete Kunststoffe sind Polyolefine, Polyethylen (PE) und Polypropylen (PP), welche vor allem zu Verpackung von Lebensmitteln eingesetzt werden. Diese eignen sich aufgrund der geringen Gebrauchstemperatur für diese Anwendung eher nicht. Ebenso sind die gängigen Polypropylene und Polycarbonate (PC) nur für Motoren mit einer geringen Betriebstemperatur geeignet, werden in den meisten Fällen allerdings ausreichen. Neben den gängigen Polyamiden (PA6 und PA6.6) eigen sich sogenannte Hochleistungsthermoplaste in besonderer Weise: Polyphthalamid (PPA), PA 4.6, Polyphenylensulfid (PPS), Polyetheretherketon (PEEK), Polyetherketon (PEK), Polyamidimide (PAI), Polysulfone (PSU, PES, PPSU) und Perfluoralkoxy-Polymere (PFA), um nur einige bekannte Werkstoffe zu nennen.

Neben der beschriebenen optional vorgesehenen formschlüssigen oder stoffschlüssigen Verbindung zwischen der Oberfläche des Spaltrohrs und der Statorinnenfläche, ist bevorzugt, dass der Vorformling auf dem Außenumfang einen Klebstoff oder eine adhäsive Oberfläche aufweist.

Das Spaltrohr geht also während des Aushärtens eine Fügeverbindung mit dem Stator ein. Das hat den positiven Effekt zur Folge, dass insbesondere eine großflächige Verklebung dazu beiträgt, dass ein Kollabieren des Spaltrohrs durch den Kühlfluiddruck unmöglich wird und zudem eine verbesserte Abdichtung an den Enden erreicht werden kann.

Man kennt zwei unterschiedlich Aufblasverfahren eines erwärmten Vorformlings. Diese sind das Streckblasverfahren und das Extrusionsblasverfahren. Beide Verfahren können in diesem Herstellprozess eines Elektromotors gemäß der Erfindung bevorzugt eingesetzt werden. Gemäß Wikipedia handelt es sich bei dem a) Streckblasen oder auch Spritzstreckblasen um ein Verfahren, bei dem Hohlkörper hergestellt werden, die in Umfangs- und Längsrichtung verstreckt sind (z. B. PET-Flaschen), und dem b) Extrusionsblasformen, auch Hohlkörperblasen genannt, um ein Verfahren der Kunststoffverarbeitung zur Herstellung von Hohlkörpern aus thermoplastischen Kunststoffen. Bei letztgenanntem wird das aufgeschmolzene Polymer über eine Förderschnecke durch die Düse gepresst, so dass ein schlauchförmiger Vorformling entsteht (Extrusion). Dieser wird in eine Blasform übergeben und durch Innendruck den Innenkonturen der Form angepasst (Blasformen). Auf diese Weise hergestellte Hohlkörper finden sowohl als Primärpackmittel wie Kanister oder Fässer als auch als technische Bauteile wie Kraftstofftanks oder Lüftungskanäle Verwendung.

Man erkennt deutlich, dass es den Erfindern gelungen ist, fachübergreifende und artfremde Verfahren bei der Herstellung eines Elektromotors einzusetzen.

Um die Ausdehnung des Vorformlings während des Aufblasvorgangs zu einem Spaltrohr zu begrenzen, ist mit Vorteil vorgesehen, dass das Gehäuse während der Einleitung des Gasdrucks mit zumindest einem ersten Gehäusedeckel verschlossen wird. Nach Fertigstellung des Spaltrohres kann der erste Gehäusedeckel abgenommen werden, um die Butzen abzuschneiden und den Rotor einbauen zu können.

Nach Ausbildung des Spaltrohres inklusive des Entfernens der Butzen und anschließendem Einsetzen des Rotors in den Rotorraum ist vorzugsweise wenigstens ein zweiter Lagerdeckel an wenigstens einem Gehäuseende anzubringen, in dem ein Lager für den Rotor integriert ist.

Sofern ein größerer offener Raum seitlich des Stators, insbesondere dessen Blechpakets, und dem Gehäusedeckel vorgesehen ist, ist es vorteilhaft, wenn dort vor der Einführung des Vorformlings eine Stützeinrichtung für das Spaltrohr eingebracht wird.

Diese Stützeinrichtung könnte beispielsweise ein den Zwischenraum überdeckender Ring sein, dessen Innenumfang dem Innenumfang des Stators entspricht. Damit ist sichergestellt, dass das Spaltrohr, das sich dann an Stator und Abstützung anlehnt, über die ganze Länge den gleichen Durchmesser hat. Die Stützeinrichtung kann nach dem Herstellen des Spaltrohres auch wieder entfernt werden.

Es kann auch von Vorteil sein, entweder den Vorgang des Aufblasens eines Vorformlings mehrfach durchzuführen oder als Multilayer- oder Coextrusionsverfahren durchzuführen, so dass das Spaltrohr aus mehreren Schichten aufgebaut wird. In besonders vorteilhafter Weise können die Schichten im späteren Betrieb sogar unterschiedliche Funktionen, beispielsweise hinsichtlich der Dichtigkeit, der Isolation oder chemischer Eigenschaften, wahrnehmen. So kann beispielsweise zum Statorraum hin ein Material verwendet werden, der sich gut mit dem Blechpaket und der Stützeinrichtung verbindet. Für eine weitere Schicht wird ein Material gewählt, das eine besondere Beständigkeit gegenüber dem Kühlmedium aufweist und die Dichtigkeit herstellt. Andere Schichten können beispielsweise eine höhere Festigkeit aufweisen, indem diese beispielsweise mit einem Füllstoff, insbesondere einem faserigen Stoff, beispielsweise Glasfasern, Karbonfasern oder ähnlichem versehen sind.

In einer weiteren Ausgestaltung können Polymere mit unterschiedlichen Eigenschaften in axialer und/oder Umfangsrichtung getrennt eingebracht werden.

Hinsichtlich des erfindungsgemäßen Elektromotors wird die Aufgabe durch die Merkmale des Anspruch 11 und insbesondere dadurch gelöst, dass das Spaltrohr innerhalb des Gehäuses durch ein Streckblasverfahren oder Extrusionsblasverfahren aus einem (erwärmten) Vorformling aus einem thermoplastischen Material erzeugt ist.

Die im Herstellverfahren betonten Vorteile des zu bildenden Elektromotors gelten selbstverständlich auch hier und sollen nicht unnötigerweise wiederholt werden.

Als rein vorrichtungsmäßiges Merkmal wird noch auf den Vorteil einer separaten Dichtung zwischen dem Spaltrohr und dem Gehäusedeckel hingewiesen, die auch bei Wärmeausdehnungen des Spaltrohres einen Austritt der Kühlflüssigkeit aus dem Statorraum in den Motorraum verhindert. Die Dichtung kann beispielsweise als einfacher O-Ring in dem Gehäusedeckel eingebettet sein.

Das hat zur Folge, dass die Wandstärke lediglich bei 0,05 bis 0,5 mm liegen muss. Der Vorteil des geringen Abstandes zwischen Stator und Rotor mit einer hohen Motoreffektivität liegt auf der Hand. So ist es auch besonders vorteilhaft, wenn das Spaltrohr über die gesamte Länge eine konstante Wandstärke hat.

Im Folgenden soll die Erfindung anhand eines Ausführungsbeispiels und sechs Figuren weiter erläutert werden.

Dabei zeigen
Fig. 1 bis Fig. 5 einen Elektromotor in 5 Herstellungsschritten,
Fig. 6 und 6a einen Querschnitt durch einen erfindungsgemäßen Motor und einen Detailausschnitt.

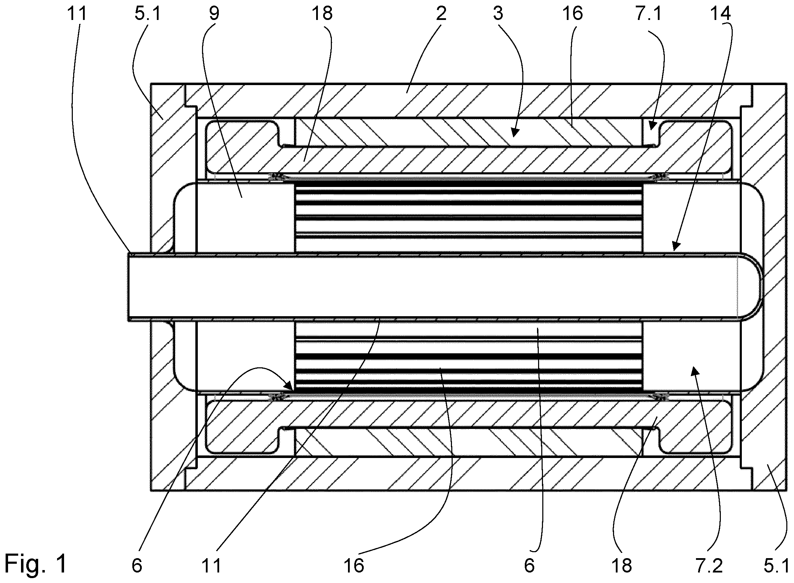

Fig. 1 bis Fig. 5 zeigen ein Ausführungsbeispiel für das Herstellverfahren des Elektromotors in fünf Zwischenschritten. Dieses Ausführungsbeispiel bezieht sich insbesondere auf ein Streckblasverfahren, wobei es sich analog auch auf ein Extrusionsblasverfahren beziehen kann.

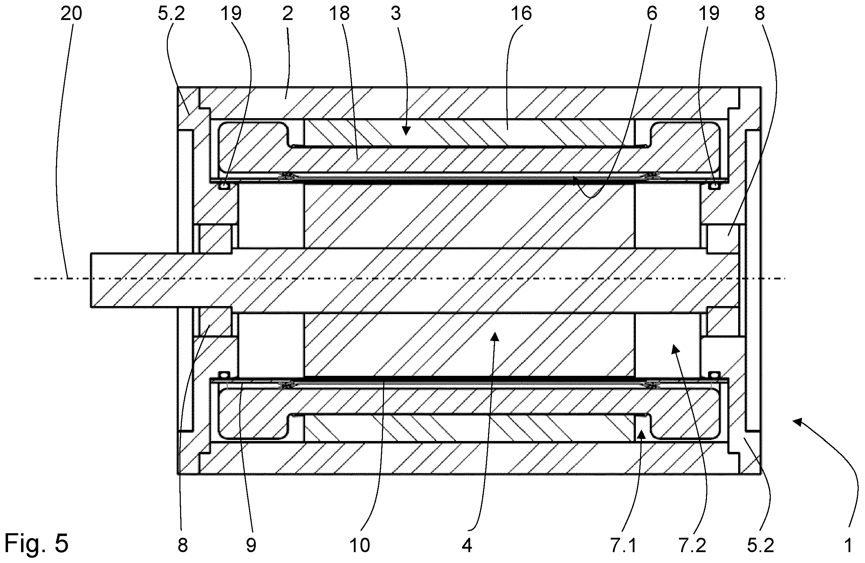

Fig. 1 stellt das Gehäuse 2 mit Stator 3 als Ausgangspunkt und Fig. 5 schließlich den fertiggestellten Elektromotor dar. Alle Darstellungen zeigen einen Längsschnitt.

Im ersten Schritt, in Fig. 1 dargestellt, wird das Gehäuse 2, das bereits den Stator 3 mit seinem Blechpaket 16 und seinen Wicklungen 18 beinhaltet, mit ersten Gehäusedeckeln 5.1 verschlossen. Zuvor wird seitlich des Blechpakets 16 bis hin zu den ersten Gehäusedeckeln 5.1 an den axialen Enden des Gehäuses 2 jeweils eine Stützeinrichtung 9 eingebracht. In diesem Ausführungsbeispiel handelt es sich um einen Ring, der den Zwischenraum überbrückt und einen Innendurchmesser hat, der auch dem Durchmesser der Statorinnenwand 6 entspricht.

In einem Gehäusedeckel 5.1 (in der Fig. 1 der auf der linken Seite dargestellte Gehäusedeckel) ist eine Öffnung verblieben, durch die ein rohrförmiger Vorformling 11 aus einem thermoplastischen Material in den zu diesem Zeitpunkt noch leeren Rotorraum 7.2 eingeführt wird. Der Vorformling befindet sich zu diesem Zeitpunkt einem erwärmten Zustand, der knapp oberhalb der Erweichungstemperatur des Materials liegt. Um den Vorformling 11 herum bilden die Statorinnenwand 6, die Stützeinrichtung 9 und Vertiefungen in den ersten Gehäusedeckeln 5.1 eine Form.

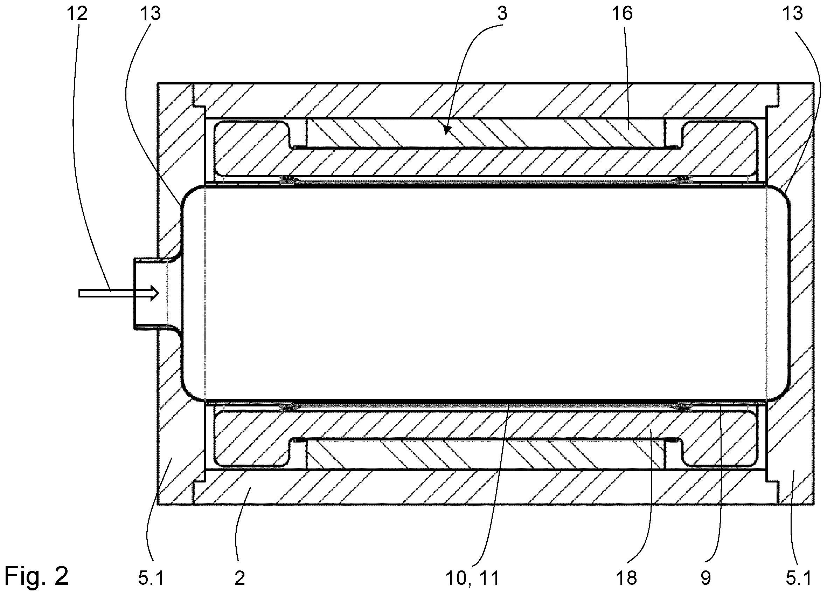

Denn wird, wie in Fig. 2 nur schematisch durch einen Pfeil dargestellt, eine Gasdruckeinleitung 12 in den Vorformling vorgenommen, so dehnt sich der Vorformling aus, bis er die Konturen der Form erreicht hat. Der Druck kann während des Vorgangs beispielsweise von etwa 1 bis 2 bar auf bis zu 40 bar erhöht werden. Im Bereich der Statorinnenwand 6 und der Stützeinrichtung 9 bildet sich somit ein die ganze Länge des Gehäuses 2 übergreifendes zylinderförmiges Rohrstück, das zum späteren Spaltrohr 10 aushärtet.

Der Vorformling hat sich so zu einer flaschenartigen Form ausgebildet, vor der der "Hals" und der "Boden", in dieser Anmeldung als Butzen 13 bezeichnet, noch entfernt werden müssen, um das endgültige zylindrische Spaltrohr 10 auszubilden.

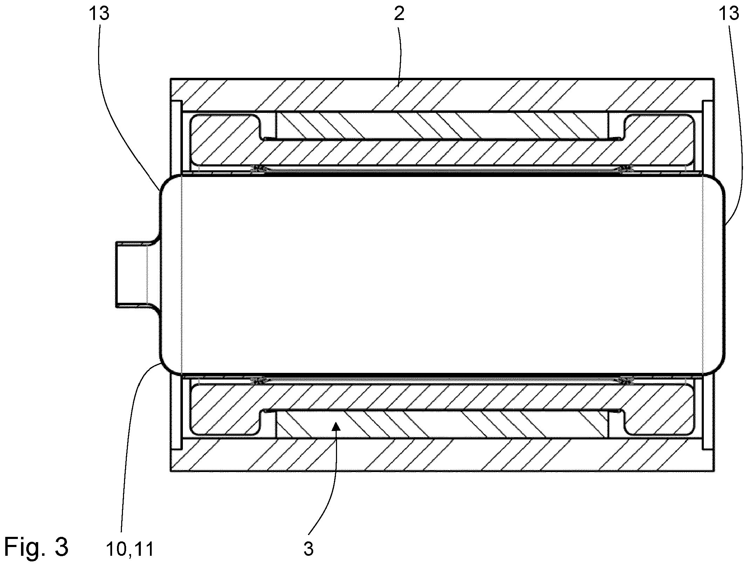

Dazu werden, wie in Fig. 3 dargestellt, die ersten Gehäusedeckel 5.1 abgenommen. Dadurch sind die Butzen 13 leicht zugänglich und abschneidbar. Anschließend ist es auch möglich, das Streckblasverfahren oder das Extrusionsblasverfahren ein zweites Mal durchzuführen. Dadurch erhält das Spaltrohr eine zweite Schicht, die aus einem anderen, eventuelle einer anderen Funktion angepassten zweiten Material bestehen kann.

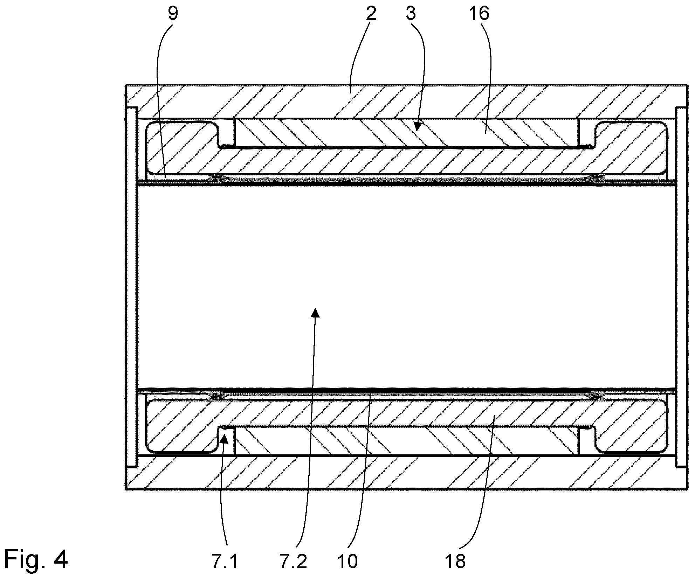

Das führt zu der Situation, die in Fig. 4 dargestellt ist. Man erkennt, dass das Spaltrohr 10 sich im Wesentlichen über die Länge des Gehäuses 2 erstreckt. Im Inneren des Spaltrohrs hat sich ein Rotorraum 7.2 ausgebildet.

Im letzten Schritt gemäß Fig. 5 wird der Elektromotor 1 fertiggestellt. Der Rotor 4 wird in das Spaltrohr 10 hineingeschoben. Daraufhin werden zweite Gehäusedeckel 5.2 an den Enden des Gehäuse 2 eingesetzt und befestigt. In den Gehäusedeckeln 5.2 sind in dem dargestellten Ausführungsbeispiel Lager 8 für den Rotor 4 aufgenommen. Außerdem wird je nach Bedarf durch eine zusätzliche Ringdichtung 19 am Gehäusedeckel eine weitere Abdichtung für das Kühlfluid, das im Statorraum 7.1 umgewälzt wird, erzielt. Als alternative oder zusätzliche Möglichkeit kann der Vorformling (siehe hier noch einmal Fig. 1) auf dem Außenumfang mit einem Klebstoff 14 oder einer adhäsiven Oberfläche ausgestattet sein, so dass er das Spaltrohr fest mit der Statorinnenwand 6 und den Stützeinrichtungen 9 verbunden ist.

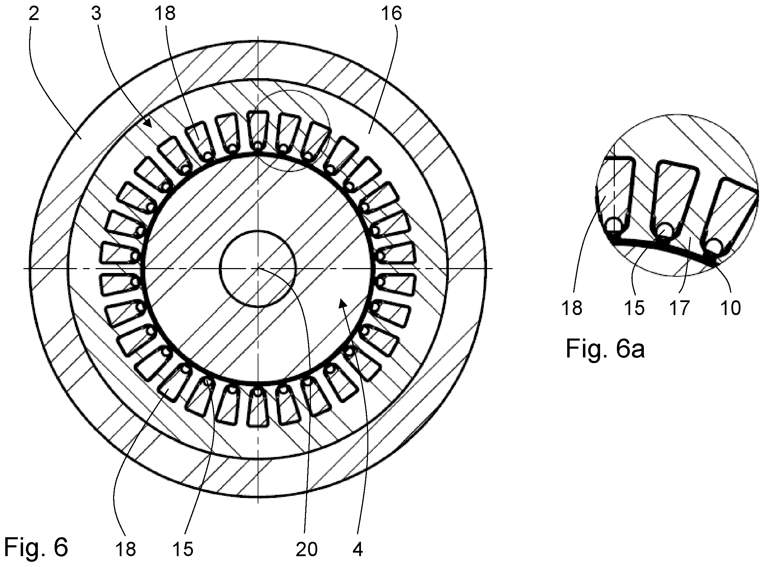

In Fig. 6 ist zum besseren Verständnis noch ein Querschnitt durch den erfindungsgemäßen Elektromotor gezeigt. Fig. 6a vergrößert den eingekreisten Ausschnitt.

In Fig. 6 erkennt man das Gehäuse 2, das den Stator 3 mit seinem Blechpaket 16 seinen Wickelspulen 18 umgibt. Im Zentrum liegt der Rotor 4 mit seiner Drehachse 20. Das mit etwas dickerer Strichstärke angezeigte Spaltrohr 10 ist durch ein Streckblasverfahren oder Extrusionsblasverfahren aus einem Vorformling 11 aus einem thermoplastischen Material erzeugt worden. In der Realität hat es in dem Ausführungsbeispiel eine möglichst konstante Wandstärke zwischen 0,05 und 0,5 mm.

Es ist exemplarisch ein Stator 3 mit einer verteilten Wicklung 18 dargestellt. Es versteht sich, dass dieses Verfahren auch bei Statoren mit einem anderen Wickelverfahren angewendet werden kann. Hier seien wiederum beispielhaft die konzentrierte Wicklung oder die Hairpin-Wickeltechnologie genannt. Bei kurzen Blechpaketen ist es ausreichend, wenn lediglich die Wickelköpfe vor der Kühlflüssigkeit umströmt werden. Bei längeren Maschinen ist es von Vorteil, wenn zusätzlich der sich in der Nut befindliche Anteil der Spule, beziehungsweise das Blechpaket im Bereich des Läufers mittels des Kühlfluids gekühlt werden. Hierzu werden optional im Gehäuse 2, im Blechpaket 16 oder entlang der Spule 18 in der Nut des Blechpaketes 16 Durchtrittsquerschnitte geschaffen, die dies ermöglichen. Bei einer verteilten Wicklung bietet sich hierbei die Stelle in der Nut, nahe am Zahn 17 des Blechpakets 16 an.

So erkennt man insbesondere im vergrößerten Ausschnitt die Zähne 17 des Blechpakets sowie die Spulen 18. Nahe dem Spaltrohr 10 verbleibt neben jeder Wicklung 18 ein Fluidkanal 15, der Bestandteil der Fluidkühleinrichtung ist. Der Fluidkanal 15 wird von Thermoöl durchströmt und kühlt dadurch die Spulen.

### Bezugszeichenliste

| | |
|---|---|
| 1 | Elektromotor |
| 2 | Gehäuse |
| 3 | Stator |
| 4 | Rotor |
| 5.1 | Erster Gehäusedeckel |
| 5.2 | Zweiter Gehäusedeckel |
| 6 | Statorinnenwand |
| 7.1 | Statorraum |
| 7.2 | Rotorraum |
| 8 | Lager |
| 9 | Stützeinrichtung |
| 10 | Spaltrohr |
| 11 | Vorformling |
| 12 | Gasdruckeinleitung (Pfeil) |
| 13 | Butzen |
| 14 | Klebstoff auf Außenumfang Vorformling |
| 15 | Fluidkühleinrichtung, Fluidkanal |
| 16 | Blechpaket |
| 17 | Zahn |
| 18 | Wickelspulen |
| 19 | Dichtung |
| 20 | Drehachse |

## Patentansprüche

1. Verfahren zur Herstellung eines Elektromotors, der
- ein Gehäuse (2), das einen oder mehrere Gehäusedeckel (5.1, 5.2) umfassen kann, mit einem Stator (3),
- einen Rotor (4) mit einer Drehachse (20) und
- ein an der Statorinnenwand (6) des Stators (3) anliegendes Spaltrohr, das eine Fluidkühleinrichtung (15) des Stators (3) zum Rotor (4) hin abdichtet, aufweist, wobei,
innerhalb des für den Rotor (4) vorgesehenen, aber noch leeren Rotorraums (7.2) innerhalb des Gehäuses (2) ein rohrartiger, auf eine Temperatur über der Erweichungstemperatur des Materials erwärmter Vorformling (11) aus einem thermoplastischen Material eingeführt wird, in den Vorformling (11) ein Gasdruck (12) derart eingeleitet wird, dass sich der Vorformling (11) radial ausdehnt, bis er an dem Stator (3) anstößt, sich rohrförmig anschmiegt und somit zumindest teilweise das Spaltrohr (10) bildet,
eventuell anfallende Butzen (13) an den Enden des zu einem Spaltrohr (10) aufgeblasenen Vorformlings (11) entfernt werden und schließlich der Rotor (4) in dem Rotorraum (7.2) gelagert wird, und dass vor der Einführung des Vorformlings (11) zumindest in dem axial seitlichen Raum zwischen dem Stator (3), insbesondere dessen Blechpakets (16), und dem Gehäusedeckel eine Stützeinrichtung (9) für das Spaltrohr (10) eingebracht wird.

2. Verfahren nach Anspruch 1, **dadurch gekennzeichnet, dass** als Vorformling (11) ein thermoplastischer, vorzugsweise polymerer Kunststoff verwendet wird.

3. Verfahren gemäß Anspruch 1 oder 2, **dadurch gekennzeichnet, dass** der Vorformling auf dem Außenumfang einen Klebstoff (14) oder eine adhäsive Oberfläche aufweist.

4. Verfahren gemäß einem der Ansprüche 1 bis 3, **dadurch gekennzeichnet, dass** der Vorformling (11) aus thermoplastischem Material in einem Streckblasverfahren zu einem Spaltrohr (10) umgeformt wird.

5. Verfahren gemäß einem der Ansprüche 1 bis 3, **dadurch gekennzeichnet, dass** der Vorformling (11) aus thermoplastischem Material in einem Extrusionsblasverfahren zu einem Spaltrohr (10) umgeformt wird.

6. Verfahren gemäß einem der Ansprüche 1 bis 5, **dadurch gekennzeichnet, dass** das Gehäuse (2) während der Einleitung des Gasdrucks (12) mit zumindest einem ersten Gehäusedeckel (5.1) verschlossen wird.

7. Verfahren gemäß einem der Ansprüche 1 bis 6, **dadurch gekennzeichnet, dass** der Rotor (4) zumindest in einem zweiten Gehäusedeckel (5.2) gelagert wird.

8. Verfahren gemäß einem der Ansprüche 1 bis 7, **dadurch gekennzeichnet, dass** das Spaltrohr (10) durch Aufblasen mehrerer Vorformlinge (11) aus mehreren Schichten aufgebaut wird.

9. Verfahren gemäß Anspruch 8, **dadurch gekennzeichnet, dass** die unterschiedlichen Schichten verschiedene Funktionen übernehmen.

10. Elektromotor mit
- einem Gehäuse (2) mit einem Stator (3),
- einem Rotor (4) mit einer Drehachse (20) und
- einem an der Statorinnenwand (6) des Stators (3) anliegenden Spaltrohr (10), das eine Fluidkühleinrichtung (15) des Stators (3) zum Rotor (4) hin abdichtet, wobei, das Spaltrohr innerhalb des Gehäuses (2) durch ein Streckblasverfahren oder Extrusionsblasverfahren nach einem der Ansprüche 1 bis 10 aus einem Vorformling (11) aus einem thermoplastischen Material erzeugt ist, und dass in axialer Richtung zwischen dem Stator (3), insbesondere dessen Blechpakets (16), und einem Gehäusedeckel (5.1, 5.2) eine Stützeinrichtung (9) für das Spaltrohr (10) vorgesehen ist.

11. Elektromotor gemäß Anspruch 10, **dadurch gekennzeichnet, dass** wenigstens an einem axialen Ende des Elektromotors (1) ein Gehäusedeckel (5.1, 5.2) vorhanden ist.

12. Elektromotor gemäß einem der Ansprüche 10 oder 11, **dadurch gekennzeichnet, dass** das Spaltrohr (10) mit der Stützeinrichtung (9) und/oder dem Stator (3) verklebt ist.

13. Elektromotor gemäß einem der Ansprüche 11 oder 12, **dadurch gekennzeichnet, dass** zwischen einem Gehäusedeckel (5.1, 5.2) und dem Spaltrohr eine separate Dichtung (19) vorgesehen ist.

14. Elektromotor gemäß einem der Ansprüche 10 bis 13, **dadurch gekennzeichnet, dass** die Wandstärke des Spaltrohrs (10) 0,05 bis 0,5 mm beträgt.

15. Elektromotor gemäß einem der Ansprüche 10 bis 14, **dadurch gekennzeichnet, dass** das Spaltrohr (10) über seine Länge eine konstante Wandstärke hat.

16. Elektromotor gemäß einem der Ansprüche 10 bis 15, **dadurch gekennzeichnet, dass** das Spaltrohr (10) aus wenigstens zwei Schichten besteht.

## Claims

1. Method for producing an electric motor which comprises:
- a housing (2) with a stator (3), the housing (2) being able to comprise one or more housing covers (5.1, 5.2),
- a rotor (4) with an axis of rotation (20), and
- a gap tube (10) that bears against the inner stator wall (6) of the stator (3) and seals a fluid cooling unit (15) of the stator (3) towards the rotor (4),
wherein within the rotor space (7.2) provided for the rotor (4) but still empty inside the housing (2), a tubular preform (11) made of a thermoplastic material, heated to a temperature above the softening temperature of the material, is introduced, a gas pressure (12) is introduced into the preform (11) such that the preform (11) expands radially until it abuts the stator (3), conforms to it in a tubular manner and thus at least partially forms the gap tube (10), any flash (13) that occurs at the ends of the preform (11) inflated into a gap tube (10) is removed, and finally the rotor (4) is mounted in the rotor space (7.2), and that before the introduction of the preform (11), a supporting device (9) for the gap tube (10) is arranged at least in the axially lateral space between the stator (3), in particular its laminated core (16), and the housing cover.

2. Method according to claim 1, **characterized in that** a thermoplastic, preferably polymeric plastic is used as the preform (11).

3. Method according to claim 1 or 2, **characterized in that** the preform (11) has an adhesive (14) or an adhesive surface on its outer circumference.

4. Method according to one of claims 1 to 3, **characterized in that** the preform (11) made of thermoplastic material is transformed into a gap tube (10) in a stretch blow-moulding process.

5. Method according to one of claims 1 to 3, **characterized in that** the preform (11) made of thermoplastic material is transformed into a gap tube (10) in an extrusion blow-moulding process.

6. Method according to one of claims 1 to 5, **characterized in that** the housing (2) is closed by at least a first housing cover (5.1) during the introduction of the gas pressure (12).

7. Method according to one of claims 1 to 6, **characterized in that** the rotor (4) is mounted at least in a second housing cover (5.2).

8. Method according to one of claims 1 to 7, **characterized in that** the gap tube (10) is constructed from several layers by inflating several preforms (11).

9. Method according to claim 8, **characterized in that** the different layers assume different functions.

10. Electric motor with:
- a housing (2) with a stator (3),
- a rotor (4) with an axis of rotation (20), and
- a gap tube (10) that bears against the inner stator wall (6) of the stator (3) and seals a fluid cooling unit (15) of the stator (3) towards the rotor (4), wherein the gap tube (10) is produced inside the housing (2) from a preform (11) made of a thermoplastic material by a stretch blow-moulding process or extrusion blow-moulding process according to one of claims 1 to 10, and that, in axial direction between the stator (3), in particular its laminated core (16), and a housing cover (5.1, 5.2), a supporting device (9) for the gap tube (10) is provided.

11. Electric motor according to claim 10, **characterized in that** at least one housing cover (5.1, 5.2) is provided at at least one axial end of the electric motor (1).

12. Electric motor according to one of claims 10 or 11, **characterized in that** the gap tube (10) is bonded to the supporting device (9) and/or the stator (3).

13. Electric motor according to one of claims 11 or 12, **characterized in that** a separate seal (19) is provided between a housing cover (5.1, 5.2) and the gap tube (10).

14. Electric motor according to one of claims 10 to 13, **characterized in that** the wall thickness of the gap tube (10) is 0.05 to 0.5 mm.

15. Electric motor according to one of claims 10 to 14, **characterized in that** the gap tube (10) has a constant wall thickness over its length.

16. Electric motor according to one of claims 10 to 15, **characterized in that** the gap tube (10) consists of at least two layers.

## Revendications

1. Procédé de fabrication d'un moteur électrique comprenant
- un carter (2) qui peut comprendre un ou plusieurs couvercles de carter (5.1, 5.2), avec un stator (3),
- un rotor (4) avec un axe de rotation (20) et
une gaine qui repose contre la paroi interne (6) du stator (3) et qui isole un dispositif de refroidissement de fluide (15) du stator (3) par rapport au rotor (4), où une préforme tubulaire (11) en matière thermoplastique, chauffée à une température supérieure à la température de ramollissement du matériau étant introduite à l'intérieur de la chambre du rotor (7.2) prévu pour le rotor (4), mais encore vide, situé à l'intérieur du carter (2), et une pression de gaz (12) étant injectée dans la préforme (11) de telle sorte que la préforme (11) se dilate radialement jusqu'à ce qu'elle vienne buter contre le stator (3) en y épousant la forme pour former un tube, constituant ainsi au moins partiellement la gaine (10),
les éventuels bourrelets (13) qui apparaissent aux extrémités de la préforme (11) dilatée pour former une gaine (10) sont éliminés, puis le rotor (4) est monté dans la chambre de rotor (7.2), et en ce qu'avant l'introduction de la préforme (11), un dispositif de support (9) pour la gaine (10) est mis en place, au moins dans la chambre axiale latérale, entre le stator (3), notamment son paquet de tôles (16), et le couvercle du carter.

2. Procédé selon la revendication 1, **caractérisé en ce qu'**une préforme (11) en matière thermoplastique, de préférence un polymère, est utilisée.

3. Procédé selon la revendication 1 ou 2, **caractérisé en ce que** le préforme (11) présente sur sa périphérie extérieure un adhésif (14) ou une surface adhésive.

4. Procédé selon l'une quelconque des revendications 1 à 3, **caractérisé en ce que** la préforme (11) en matière thermoplastique est transformée en une gaine (10) par un procédé d'étirage-soufflage.

5. Procédé selon l'une quelconque des revendications 1 à 3, **caractérisé en ce que** la préforme (11) en matière thermoplastique est transformée en une gaine (10) par un procédé d'extrusion soufflage.

6. Procédé selon l'une quelconque des revendications 1 à 5, **caractérisé en ce que** le carter (2) est fermé par au moins un premier couvercle de carter (5.1) pendant l'introduction de la pression de gaz (12).

7. Procédé selon l'une des revendications 1 à 6, **caractérisé en ce que** le rotor (4) est monté dans au moins un deuxième couvercle de carter (5.2).

8. Procédé selon l'une quelconque des revendications 1 à 7, **caractérisé en ce que** la gaine (10) est constituée de plusieurs couches par soufflage de plusieurs préformes (11).

9. Procédé selon la revendication 8, **caractérisé en ce que** les différentes couches remplissent des fonctions distinctes.

10. Moteur électrique avec
- un carter (2) avec un stator (3),
- un rotor (4) avec un axe de rotation (20) et
- une gaine (10) en appui contre la paroi intérieure (6) du stator (3), qui assure l'étanchéité d'un dispositif de refroidissement de fluide (15) du stator (3) par rapport au rotor (4), où
la gaine étant fabriquée à l'intérieur du carter (2) par un procédé de soufflage étirage ou d'extrusion-soufflage selon l'une des revendications 1 à 10 à partir d'une préforme (11) en matière thermoplastique, et en ce que l'on prévoit un dispositif de support (9) pour la gaine (10) dans la direction axiale entre le stator (3), notamment son paquet de tôles (16), et un couvercle de carter (5.1, 5.2).

11. Moteur électrique selon la revendication 10, **caractérisé en ce qu'**un couvercle de carter (5.1, 5.2) au moins est prévu à une extrémité axiale du moteur électrique (1).

12. Moteur électrique selon l'une quelconque des revendications 10 ou 11, **caractérisé en ce que** la gaine (10) est collée au dispositif de support (9) et/ou au stator (3).

13. Moteur électrique selon l'une quelconque des revendications 11 ou 12, **caractérisé en ce qu'**un joint d'étanchéité séparé (19) est prévu entre un couvercle de carter (5.1, 5.2) et la gaine (10).

14. Moteur électrique selon l'une des revendications 10 à 13, **caractérisé en ce que** l'épaisseur de paroi de la gaine (10) est de 0,05 à 0,5 mm.

15. Moteur électrique selon l'une des revendications 10 à 14, **caractérisé en ce que** la gaine (10) présente une épaisseur de paroi constante sur toute sa longueur.

16. Moteur électrique selon l'une des revendications 10 à 15, **caractérisé en ce que** la gaine (10) est constituée d'au moins deux couches.
